Europäisches Patentamt

European Patent Office

Office européen des brevets

(19)

(11) Publication number: **0 448 281 A1**

# EUROPEAN PATENT APPLICATION

(12)

(21) Application number: **91302123.4**

(22) Date of filing: **13.03.91**

(51) Int. Cl.⁵: **B60K 17/28, B60K 28/04, B60K 28/14**

(30) Priority: **13.03.90 IE 904/90**
**08.11.90 IE 4040/90**

(43) Date of publication of application:
**25.09.91 Bulletin 91/39**

(84) Designated Contracting States:
**AT BE CH DE DK ES FR GB GR IT LI LU NL SE**

(71) Applicant: **Crowley, John**
**Chapel Street**
**Bandon, County Cork (IE)**
Applicant: **Crowley, Michael**
**Chapel Street**
**Bandon, County Cork (IE)**

(72) Inventor: **Crowley, John**
**Chapel Street**
**Bandon, County Cork (IE)**
Inventor: **Crowley, Michael**
**Chapel Street**
**Bandon, County Cork (IE)**

(74) Representative: **Chettle, Adrian John et al**
**Withers & Rogers 4, Dyer's Buildings**
**Holborn London EC1N 2JT (GB)**

(54) Safety apparatus for power driven machinery.

(57) A tractor has a diesel engine (7) with a power take-off shaft (8) which is to be coupled to machinery (9) to drive it. A fuel pump (13) which supplies diesel oil to the engine (7) can be rendered inoperative by movement of a member (14) by energisation of a solenoid (15), which occurs either when one of two switches (3) is closed by an operator who has dismounted from a seat (1) or when two switches (2 and 11) are closed. One switch (2) is under the seat (1), and is closed when there is no substantial weight on the seat, or is near a handbrake lever and is closed when the handbrake is on. The other switch (11) is closed when a power take-off lever (12) is moved to couple the shaft (8) to the machinery (9). The solenoid (15) can also be closed by accidental or deliberate movement of a rod which controls a switch.

EP 0 448 281 A1

Jouve, 18, rue Saint-Denis, 75001 PARIS

FIG. 6

# SAFETY APPARATUS FOR POWER DRIVEN MACHINERY

The present invention is concerned with the problem that when an agricultural tractor, for example one driven by a diesel engine, is coupled to machinery behind the tractor, persons working on the machinery are sometimes killed or injured. It is desirable to be able to stop the engine from behind the tractor when an accident occurs, or is foreseen, and to prevent the driver inadvertently leaving his seat, with the engine running and coupled to the machinery, or leaving the hand brake on with the engine running and coupled to the machinery.

According to the invention, there is provided a tractor comprising an engine, a fuel pump for supplying fuel to the engine and a power take-off shaft to which machinery may be coupled to be driven by the engine, characterized in that a control member for stopping the supply of fuel from the fuel pump to the engine is arranged to be moved by operation of at least one electrical switch, whereby the engine is stopped or the fuel pump is driven by an electric motor and an actuating member is arranged to operate an electrical switching device which switches off the motor whereby the engine is stopped.

In one example, two switches are connected in series and the control member is moved to stop the engine only when both switches are closed, one of the switches being closed by movement of a power take-off lever into a position in which the machinery is coupled to the power take-off shaft. Then, preferably, either the other switch is positioned beneath a seat on which a tractor driver sits and is open only when he is sitting on the seat or a sufficiently heavy weight rests on the seat or the other switch is positioned adjacent an operating lever of the hand brake of the tractor and is open only when the brake is not on.

In another example, the control member is moved to stop the engine when only one switch is closed and this switch is a push-button switch which is normally open and is mounted on the outer face of a rear mudguard of the tractor.

In a further example, the control member is moved to stop the engine when only one switch is closed and this switch is operated by movement of a rod projecting rearwardly from the rear of the tractor. Preferably the rod is coupled to a lever which is biased by a spring to occupy a position in which the switch is open, movement of the rod in a particular direction causing the lever to move, against the force exerted by the spring and to engage an operating arm of the switch and close the contacts of the switch.

Preferably, the switch or the two switches is or are in series with a solenoid, the armature of which is coupled to the control member.

In another example, the fuel pump is driven by an electric motor and said actuating member is a rod which projects rearwardly from the rear of the tractor, appropriate movement of the rod opening a normally-closed switch, constituting said switching device, in the supply circuit of the motor.

Examples in accordance with the invention are described below with reference to the accompanying drawings, in which:

Figure 1 diagrammatically illustrates a first example and shows various parts mounted on a tractor and machinery to be driven from the tractor engine;

Figure 2 shows an electrical circuit of the first example and also shows a switch of a second example;

Figure 3 diagrammatically shows the second example;

Figures 4 and 5 show perspective views of the switch of the second example;

Figure 6 shows the rear end of a tractor with the second example mounted on it; and

Figure 7 shows how the switch is mounted on the tractor.

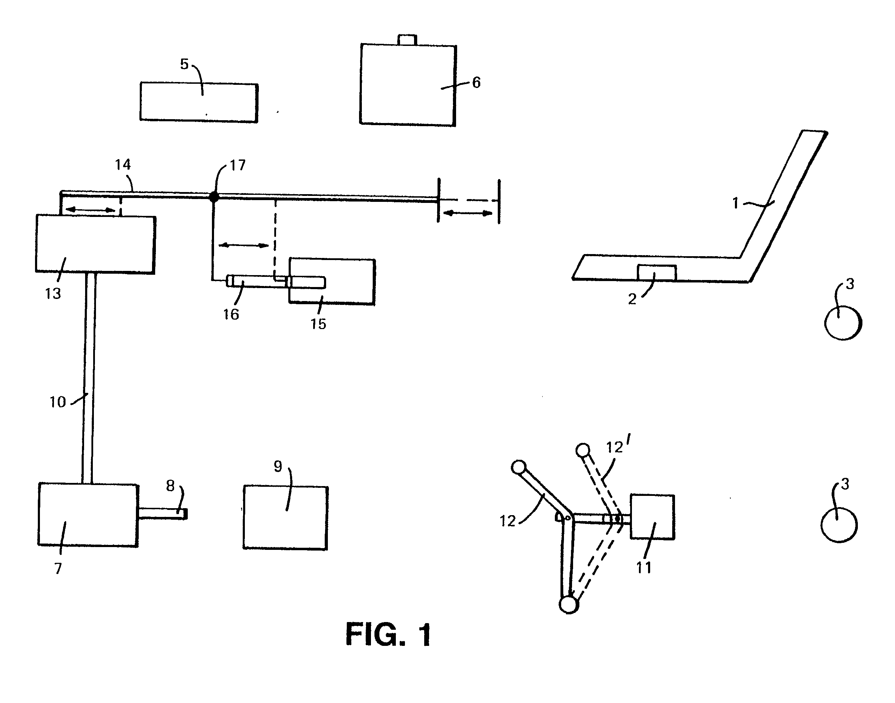

Figure 1 diagrammatically shows parts which are mounted on a tractor (not shown), including a driver's seat 1 with a switch 2 beneath it, two press-button switches 3, which are normally open and are mounted on the rear surfaces of respective rear mudguards (not shown) of the tractor, a horn 5, a battery 6, a diesel engine 7, having a power take-off shaft 8, and a power take-off lever 12 for coupling machinery 9, near the back of the tractor, to the shaft 8. When the lever 12 is moved from the position shown in full lines to the position 12' shown in dotted lines, the machinery 9 is coupled to the shaft 8, and is driven by the engine, and this movement of the lever 12 closes a microswitch 11.

Also mounted on the tractor is a solenoid 15 having an armature 16 which is connected at 17 to a stopper rod 14 which controls a fuel pump 13 which is driven by the engine 7 and supplies diesel oil through a pipe 10 to the engine 7. When the solenoid 15 is energised, the rod 14 moves to the right to the position shown in dotted lines and a valve on the input side or the output side of the pump 13 is closed so that the engine 7 stops. Energisation of the solenoid is always accompanied by sounding of the horn.

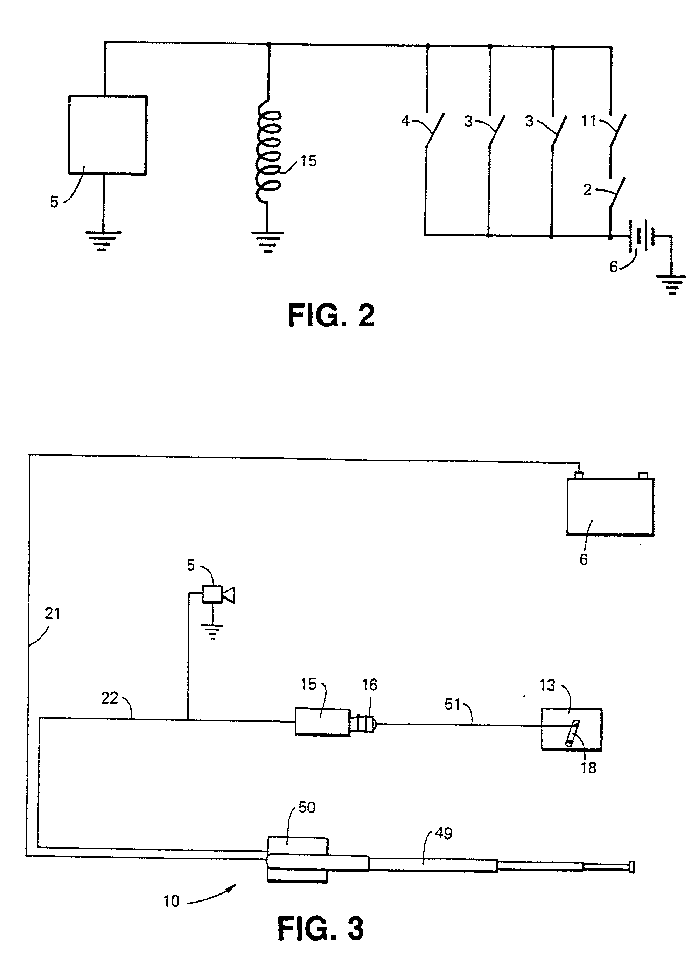

Figure 2 shows the electrical circuit of the parts 2, 3, 5, 6, 11 and 15 and also shows a switch 4, the function of which is explained below.

The switch 2 is weight-sensitive, so that it is open all the time the driver is sitting on the seat 1 and it closes when he moves off it. If the microswitch 11 is then in the closed state, the solenoid 15 is energised, with the consequences explained above.

Instead of the switch 2 being beneath the driver's seat, it could be adjacent an operating lever of the handbrake of the tractor and arranged to be closed when the handbrake is on. In the first case the driver must ensure that the lever 12 is in the position shown in full lines before he leaves his seat, otherwise the engine will stop, and in the second case the lever 12 must be in the position shown in full lines, before he puts the handbrake on, in order to prevent the engine stopping. Thus the danger of the driver becoming caught in running machinery is eliminated unless he puts a sufficiently heavy weight in the seat or he releases the handbrake; then he can stop the engine by means of one of the switches 3 and 4, since closure of any one of these results in energisation of the solenoid 15.

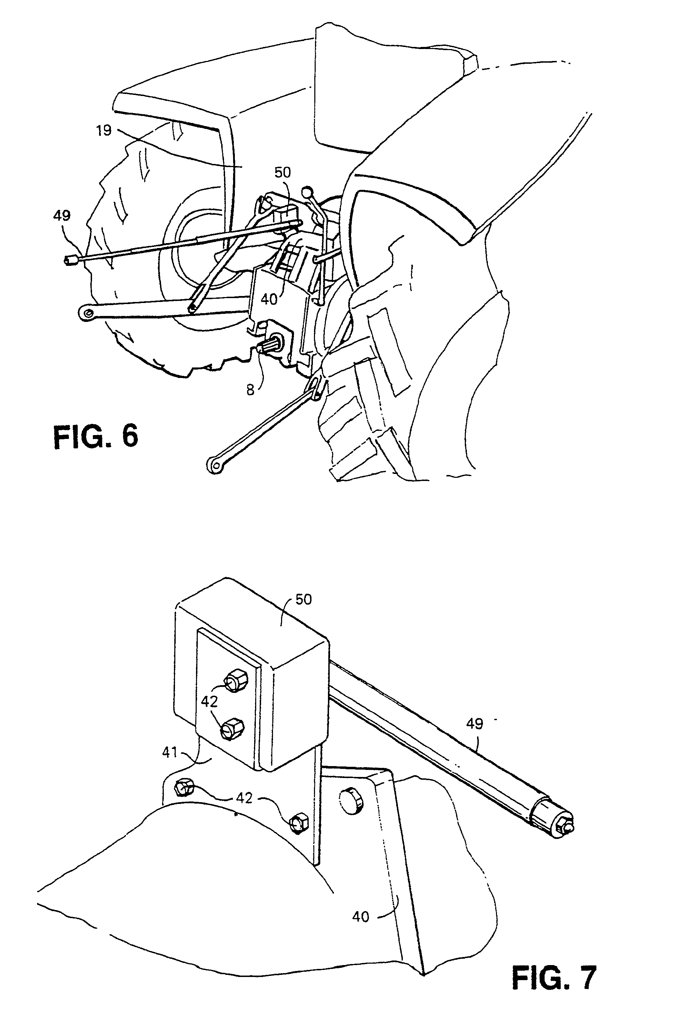

Figure 3 shows an elongate operating member 49 mounted on a housing 50 containing the switch 4. The switch 4 is closed when the member 49 is moved appropriately and then the battery 6 is connected via the switch 4 to the solenoid 15. The armature 16 of the solenoid 15 is connected by a cable 51 to the stopper arm 18 of the fuel pump 13 of a diesel tractor 19 (Figure 6). Thus, when the solenoid 15 is energised, the armature 16 moves to the left (considering Figure 1) causing the cable 51 to move to the left and the stopper arm 18 to be moved to an off position thus closing a valve on the input side or the output side of the fuel pump 13, which results in the engine (not shown) of the tractor 19 being stopped. An electrical lead 21 is connected between the switch 4 and the tractor battery 6 and a further lead 22 is connected between the switch 4 and the solenoid 15. The lead 22 is also connected to the horn 5.

The solenoid 15 shown in Figure 3 has only one winding. It could be replaced by a solenoid having a pulling-in winding connected between the switch 4 and earth and a holding-in winding connected between the battery 6 and earth. The current through the holding-in winding is insufficient to displace the armature of the solenoid but when the armature of the solenoid has been displaced by closing of the switch 4, a switch 3 or the switches 2 and 11, the current in the holding-in winding is sufficient to prevent the armature moving back to its original position.

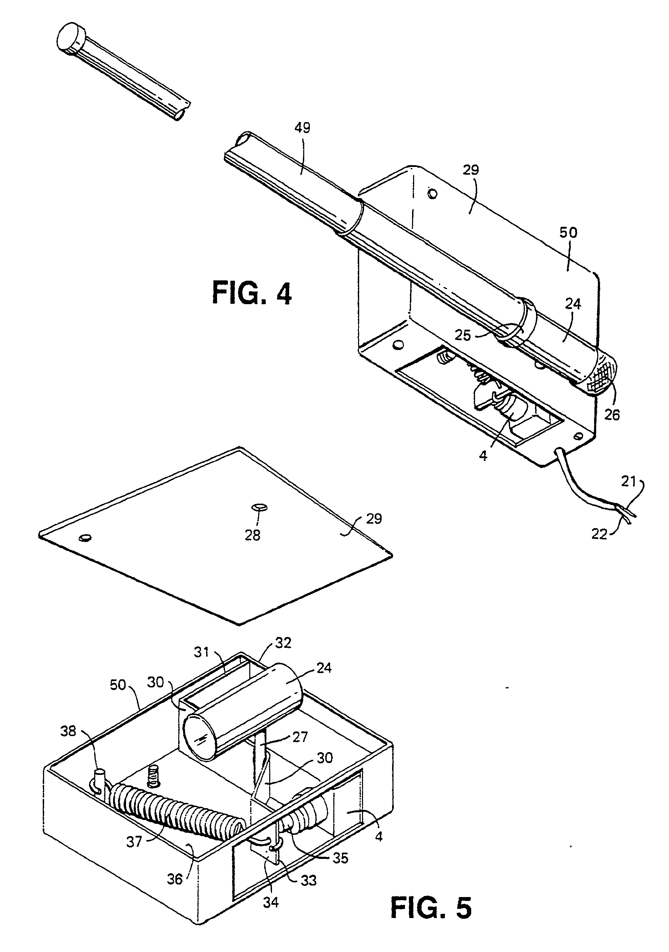

As shown more clearly in Figures 4 and 5 the operating member 49 is in the form of a telescopic rod. It projects rearwardly from the rear of the tractor and is threaded through a hollow cylindrical member 24 and is retained in place by a collar 25 fixed on the member 49 and a rubber cap 26 fixed to the end of the member 49. The member 24 has a support rod 27 fixed thereon which passes through an aperture 28 in a top plate 29 of the housing 50. The support rod 27 is also fixed to a lever 30 in the housing 50, for example by welding. As shown in Figure 5, one end 31 of the lever 30 abuts a side wall 32 of the housing and the other end 33 of the lever 30 has a flat face 34 which in use is arranged to operate the arm 35 of the switch 4. The support rod 27 is suitably rotatably mounted on the base 36 of the housing 50. A coil spring 37 is mounted in the housing 50 with one end attached to a retaining post 38 and the other end being attached to the flat face 34 of the lever 30, as shown. The coil spring 37 is arranged so that in the position shown in Figure 5, the end 31 of the lever 30 just abuts the side wall 32 of the housing 12 and the face 34 is very slightly spaced apart from the arm 35 of the switch 4, so that the switch 4 is in an electrically open condition.

Thus, if the operating member 49 is turned slightly in an anti-clockwise direction, considering Figure 4, against the bias of the spring 37, the face 34 of the lever 30 engages the arm 35 of the switch 4 and pushes it inwards into the body of the switch and closes the contacts (not shown) of the switch 4, so that power is supplied from the battery 6 to the solenoid 15. The operating member 49 may be turned as mentioned above by a person falling on it or by a person who has fallen off the tractor and landed near the member 49, or by a person who has not fallen but fears an accident.

As shown in Figures 6 and 7, the housing 50, with the telescopic operating member 49, is mounted on the chassis 40 of the tractor 19 by means of a bracket 41 and bolts 42. The housing 50 is fixed to the chassis 40 so that the member 49 is positioned above the power take-off shaft 8 of the tractor.

When the tractor 19 is operating farm machinery which is driven from the power take-off shaft 8, the member 49 is extended by the user, so that if an accident occurs, or is about to occur, at the rear of the tractor, the person involved can quickly push the member 49 downwardly. This results in the switch 4 being closed, the solenoid 15 being energised and the stopper arm 18 on the fuel pump 13 being moved to the off position so that the engine of the tractor is stopped, thus stopping rotation of the power take-off shaft 8.

When the tractor is not operating farm machinery, the member 49 may be put in the retracted condition, as shown in Figure 7.

After stopping of the tractor engine, it can only be restarted by operating the start/stopper control (not shown), normally located in the driver's compartment, to return the stopper arm 18 of the fuel pump 13 to the on position. Once the member 49 is released, the spring 37 returns the lever 30 and member 49 to their normal positions ready for the next operation. An electrical timer circuit may also be connected to the solenoid 15, so that the solenoid 15 will remain energised for a predetermined time period, thus maintaining the fuel pump 13 off and preventing the engine of the tractor from being started for this period of time.

Various suitable switching mechanisms may be used with the member 49 so that any movement of the member 49, for example upwards, downwards or sideways, from a null position, will result in closure of the switch 4 and energisation of the solenoid 15.

As many accidents occur each year which involve the power take-off shaft of a tractor, the invention has the advantage of enabling a person working at the rear of a tractor to quickly stop the tractor engine and thus the power take-off shaft.

Apparatus in accordance with the invention may include, (a) all of the switches 2, 3, 4 and 11 shown in Figure 2, or only (b) the switches 2 and 11, or only (c) the switch 4, or only (d) one or both of the switches 3. Other combinations of switches within the scope of the invention are (b) and (c) alone, (b) and (d) alone and (c) and (d) alone.

Instead of having a mechanically driven fuel pump 13, there could be a fuel pump driven by an electric motor. Then the solenoid 15 and the stopper rod 14 or the cable 51 would be replaced by a switch in the circuit of the motor, which switch is opened, to stop the fuel pump, when the switch 4 or a switch 3 is closed, or the switches 2 and 11 are closed. Another possibility is to replace the normally-open switch 4 by a normally closed switch in the housing 50, which switch is in the supply circuit to the pump motor and opens when the member 49 is moved appropriately. An additional switch in the pump motor circuit then opens when a switch 3 is closed or when the switches 2 and 11 are both closed, if indeed the switch 3 and/or the switches 2 and 11 is or are present in the apparatus.

## Claims

1. A tractor (19) comprising an engine (7), a fuel pump (13) for supplying fuel to the engine and a power take-off shaft (8) to which machinery (9) may be coupled to be driven by the engine, characterized in that a control member (14, 51) for stopping the supply of fuel from the fuel pump (13) to the engine (7) is arranged to be moved by operation of at least one electrical switch (2, 3, 4, 11), whereby the engine is stopped or the fuel pump (13) is driven by an electric motor and an actuating member (49) is arranged to operate an electrical switching device which switches off the motor whereby the engine is stopped.

2. A tractor according to Claim 1, characterized in that two switches (2, 11) are connected in series and the control member (14) is moved to stop the engine only when both switches are closed, one of the switches (11) being closed by movement of a power take-off lever (12) into a position (12') in which the machinery (9) is coupled to the power take-off shaft (8).

3. A tractor according to Claim 2, characterized in that the other switch (2) is positioned beneath a seat (1) on which a tractor driver sits and is open only when he is sitting on the seat or a sufficiently heavy weight rests on the seat.

4. A tractor according to Claim 2, characterized in that the other switch (2) is positioned adjacent an operating lever of the hand brake of the tractor and is open only when the brake is not on.

5. A tractor according to any preceding claim, characterized in that the control member (14) is moved to stop the engine when only one switch (3) is closed and this switch is a push-button switch which is normally open and is mounted on the outer face of a rear mudguard of the tractor.

6. A tractor according to any preceding claim, characterized in that the control member (14) is moved to stop the engine when only one switch (4) is closed and this switch is operated by movement of a rod (49) projecting rearwardly from the rear of the tractor.

7. A tractor according to Claim 6, characterized in that the rod (49) is coupled to a lever (30) which is biased by a spring (37) to occupy a position in which the switch (4) is open, movement of the rod (49) in a particular direction causing the lever (30) to move, against the force exerted by the spring (37) and to engage an operating arm (35) of the switch (4) and close the contacts of the switch.

8. A tractor according to any preceding claim, characterized in that the electrical switch (2, 3, 4, 11) is in series with a solenoid (15) the armature (16) of which is coupled to the control member (14, 51).

9. A tractor according to claim 8, characterised in that the electrical switch (2, 3, 4, 11) is in series with a first of two windings of the solenoid (15), the second winding serving to maintain the armature in position after it has been displaced by current in the first winding.

10. A tractor according to claim 1, characterised in that the fuel pump (13) is driven by an electric motor and said actuating member (49) is a rod which projects rearwardly from the rear of the tractor, appropriate movement of the rod opening a normally-closed switch, constituting said switching device, in the supply circuit of the motor.

FIG. 1

**FIG. 2**

**FIG. 3**

FIG. 4

FIG. 5

8

FIG. 6

FIG. 7

**European Patent Office**

## EUROPEAN SEARCH REPORT

Application Number

EP    91 30 2123

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-16588 (G.LAW) <br> * the whole document * | 1, 6-8 | B60K17/28 <br> B60K28/04 <br> B60K28/14 |
| A | | 5, 9 | |
| | --- | | |
| A | US-A-3605962 (E.MAYNARD) <br> * column 5, lines 1 - 5; figures 3, 7, 8 * | 1 | |
| | --- | | |
| A | US-A-4369745 (W.HOWARD) <br> * column 6, lines 4 - 12; figure 1 * | 1-3 | |
| | --- | | |
| A | PATENT ABSTRACTS OF JAPAN <br> vol. 9, no. 311 (M-436)(2034) 7 December 1985, <br> & JP-A-60 146726 (SUENORI TSUJIMOTO) 2 August 1985, <br> * the whole document * | 4 | |
| | --- | | |
| A | FR-A-2443190 (VAN DER LELY) <br> * the whole document * | 1, 5 | |
| | ----- | | |

TECHNICAL FIELDS SEARCHED (Int. Cl.5 )

B60K
A01D

The present search report has been drawn up for all claims

| Place of search | Date of completion of the search | Examiner |
|---|---|---|
| THE HAGUE | 02 JULY 1991 | CZAJKOWSKI A.R. |

EPO FORM 1503 03.82 (P0401)